# EUROPÄISCHE PATENTSCHRIFT

(11) **EP 2 559 893 B1**
(45) Veröffentlichungstag und Bekanntmachung des Hinweises auf die Patenterteilung: **27.08.2014**
(21) Anmeldenummer: 12192628.1
(22) Anmeldetag: 14.05.2008
(51) Int. Cl.: F03D 7/02, H02P 3/08, H02P 3/14, H02P 7/00, H02P 7/28

(54) **ROTORBLATTVERSTELLVORRICHTUNG FÜR EINE WINDENERGIEANLAGE**
ROTOR BLADE ADJUSTMENT DEVICE FOR A WIND TURBINE
DISPOSITIF DE RÉGLAGE DE PALES DE ROTOR D'UNE ÉOLIENNE

(30) Priorität: 14.05.2007 DE 102007022511
(43) Veröffentlichungstag der Anmeldung: 20.02.2013
(62) Teilanmeldung aus: 08758513.9
(73) Patentinhaber: Senvion SE, 22297 Hamburg (DE)
(72) Erfinder: Letas, Heinz-Hermann, 24796 Bovenau (DE)
(74) Vertreter: Glawe, Delfs, Moll

(56) Entgegenhaltungen:
- EP-A- 1 128 064
- EP-A- 1 385 261
- EP-A- 1 744 444
- WO-A-98/06595
- WO-A-2006/133689
- DE-A1- 10 253 811
- GB-A- 2 201 309

## Beschreibung

Die Erfindung betrifft eine Windenergieanlage mit einem Rotor mit verstellbaren Rotorblättern zum Antrieb eines Generators, einer Verstelleinrichtung für die Rotorblätter mit einem Stellmotor, der mindestens eine Erregungswicklung aufweist, wobei die Verstelleinrichtung eine Drehmomentschwächungseinrichtung aufweist, die selbsttätig ein Schleppmoment des Stellmotors verringert.

Moderne Windenergieanlagen weisen Rotoren mit verstellbaren Rotorblättern auf. Durch die Verstellung kann der Anstellwinkel der Rotorblätter in Bezug auf die Luftströmung verändert werden. Die Verstellung der Rotorblätter dient auch dazu, den Rotor der Windenergieanlage anzuhalten. Dazu werden die Rotorblätter in eine sogenannte Fahnenstellung verfahren. Aus Sicherheitsgründen müssen die Windenergieanlagen so eingerichtet sein, dass der Rotor im Bedarfsfall schnell zum Stillstand gebracht werden kann. Dies geschieht einerseits dann, wenn der Wind übermäßig stark wird, und andererseits aber auch dann, wenn Teile der Windenergieanlage ausfallen sollten. Das Verstellen der Rotorblätter in die sichere Fahnenstellung erfolgt im Regelbetrieb mittels des Blattverstellantriebs und seiner Regelung. Für einen sicheren Notbetrieb kann aber nicht mehr davon ausgegangen werden, dass die Regelung noch in vollem Umfang zur Verfügung steht. Die Blattverstelleinrichtung soll so ausgebildet sein, dass auch im ungeregelten Notbetrieb die Rotorblätter schnell und sicher in die Fahnenstellung verfahren werden können.

Es hat sich gezeigt, dass im ungeregelten Notbetrieb unter bestimmten Bedingungen das zu verstellende Rotorblatt aufgrund von aerodynamischen Kräften schneller verstellt wird, als es der Geschwindigkeit des Stellmotors entspricht. Der Stellmotor wird dann von dem Rotorblatt angetrieben und wirkt als Generator. Der Stromfluss durch den Anker dreht sich um. Dieser sog. Rückspeisestrom fließt durch die Reihenschlusswicklung, wodurch die Magnetisierung vergrößert wird. Die induzierte Spannung steigt, was zu einer weiteren Erhöhung des Stroms führen kann. Im Ergebnis bildet sich eine unerwünschte Mitkopplung aus, die zu gefährlichen Instabilitäten führen kann. Insbesondere ändert sich die auf den Turmkopf der Windenergieanlage wirkende Last, wodurch es zu Schwingungen am Turm kommen kann.

Um das Auftreten solcher Instabilitäten auch im Schiebebetrieb zu vermeiden, ist es bekannt, bei als Doppelschlussmotoren ausgebildeten Stellmotoren die Reihenschlusswicklung mittels einer Diode im Schiebebetrieb zu überbrücken. Der im Schiebebetrieb vom Stellmotor erzeugte Strom wird durch die Diode kurzgeschlossen so dass entsprechend kein Strom mehr durch die Reihenschlusswicklung fließt und die Magnetisierung entsprechend abfällt. Das Schleppmoment des Motors verringert sich dadurch (EP-A-1 744 444). Es hat sich aber gezeigt, dass bei bestimmten Bauarten insbesondere von Doppelschlussmotoren das Kurzschließen der Reihenschlusswicklung zu einem ungünstigen Verlauf der Drehmoment-Drehzahl-Kennlinie führt, und zwar ist der Anstieg des Drehmoments über die Drehzahl zu flach. Es besteht die Gefahr von Überdrehzahlen mit einer Beschädigung der Verstelleinrichtung.

Der Erfindung liegt die Aufgabe zu Grunde, eine verbesserte Verstellvorrichtung für die Rotorblätter einer Windenergieanlage zu schaffen, welche die oben genannten Nachteile auf einfache Weise vermeidet.

Die erfindungsgemäße Lösung liegt in den Merkmalen der unabhängigen Ansprüche. Vorteilhafte Weiterbildungen sind Gegenstand der abhängigen Ansprüche.

Bei einer Windenergieanlage umfassend einen Rotor mit verstellbaren Rotorblättern zum Antrieb eines Generators, einer Verstelleinrichtung für die Rotorblätter mit einem Stellmotor, der mindestens eine Erregungswicklung aufweist, wobei die Verstelleinrichtung eine Drehmomentschwächungseinrichtung aufweist, die selbsttätig ein Schleppmoment des Stellmotors verringert, ist gemäß der Erfindung vorgesehen, dass die Drehmomentschwächungseinrichtung einen Stromteiler umfasst, der einen Strom durch die Erregungswicklung in der Weise schaltet, dass die Erregungswicklung im Motorbetrieb voll und im Schiebebetrieb nur teilweise von dem Strom durchflossen wird.

Die Erfindung hat erkannt, dass durch eine teilweise Bestromung der Erregungswicklung mittels des Stromteilers die von der Erregungswicklung bewirkte Magnetisierung auf einfache Weise so eingestellt werden kann, dass einerseits die durch die Verringerung der Magnetisierung erwünschte Stabilität im generatorischen Betrieb des Stellmotors erreicht werden kann, aber andererseits die Magnetisierung noch so weit aufrecht erhalten wird, dass noch ein ausreichend großes Bremsmoment entwickelt wird. Verglichen mit der aus dem Stand der Technik bekannten Ausführungsform mit Überbrückung der Erregungswicklung ergibt sich damit der gewünschte steilere Verlauf der Drehmoment-Drehzahl-Kennlinie. Die Erfindung verleiht dem Stellmotor eine eigene Kennlinie für den Schiebebetrieb. Sie ermöglicht es, mit geringstem Aufwand der unveränderten Kennlinie des Stellmotors für den motorischen Betrieb eine zweite, wählbare Kennlinie für den Schiebebetrieb hinzuzufügen.

Der Stromteiler kann, wie nachfolgend näher beschrieben ist, vollständig aus passiven Bauelementen ausgeführt sein. Der erfindungsgemäße Stromteiler verknüpft damit auf verblüffend einfache Weise Vorteile hinsichtlich verbesserter Stabilität, ausreichend großem Bremsmoment mit höchster Ausfallsicherheit, und damit Geeignetheit für den Notbetrieb. Der Gefahr von Beschädigungen des Antriebs wird entgegengewirkt. Weiter wird der Gefahr von Schwingungen des Turms beziehungsweise des Turmkopfs entgegengewirkt, wodurch das Risiko von Überlastungen der mechanischen Struktur verringert wird. Die Betriebs- und Ausfallsicherheit der Anlage können dank der Erfindung mit geringem Aufwand erheblich gesteigert werden.

Nachfolgend seien einige verwendete Begriffe erläutert:
Unter dem Schleppmoment wird das von dem Motor aufgenommene Drehmoment verstanden, das er als generatorisch wirkende Bremse aufnimmt.
Unter einem Notbetrieb ist eine Betriebsart zu verstehen, bei der keine externe Steuerung erforderlich ist, und die gegebenenfalls aus einer eigenen, autarken (Gleichstrom-) Energieversorgung gespeist wird. Vorzugsweise kann eine mit robusten Bauelementen aufgebaute "Schützsteuerung" vorgesehen sein.

Der Stromteiler umfasst zweckmäßigerweise ein Schaltelement, das im Schiebebetrieb passiv durchschaltet. Unter passiv wird hierbei verstanden, dass kein von einer externen Steuerung oder Regelung zugeführtes Schaltsignal erforderlich ist. Für den Notbetrieb hat dies den erheblichen Vorteil, dass das Schaltelement autark arbeitet. Ein Ausfall der Betriebssteuerung der Windenergieanlage oder anderer Steuerungsteile bleibt damit ohne Einfluss auf die Funktion des erfindungsgemäßen Stromteilers.

Gemäß der Erfindung können insbesondere zwei Arten vorgesehen sein, auf welche die Aufteilung des durch die Erregungswicklung fließenden und eine Magnetisierung bewirkenden Stroms erreicht werden kann. Eine erste Art besteht darin, dass der Stromteiler einen Parallelzweig zur Erregungswicklung mit einem Widerstand und einem Schaltelement umfasst, das im Schiebebetrieb durchschaltet. Im Schiebebetrieb sind die Erregungswicklung und der Widerstand also parallel geschaltet, so dass sich der Strom auf die Erregungswicklung und den Widerstand aufteilt. Im normalen motorischen Betrieb hingegen sperrt das Schaltelement, so dass keine Verzweigung des Stroms auftritt. Durch die Parallelschaltung wird im Schiebebetrieb der Stromfluss durch die Erregungswicklung gemäß dem Verhältnis der Leitwerte der Erregungswicklung und des Widerstands verringert. Hierbei kann durch die Wahl des Widerstandswerts (welcher der Kehrwert des Leitwerts ist) bestimmt werden, welcher Anteil des Stroms durch die Erregungswicklung fließen soll, und damit die Steigung der Drehmoment-Drehzahl-Kennlinie eingestellt werden. Ist beispielsweise der Widerstand so gewählt, dass sein Leitwert genauso groß ist wie derjenige der Erregungswicklung, dann fließt der Strom zur einen Hälfte durch den Widerstand und zur anderen Hälfte durch die Erregungswicklung. Der Strom durch die Erregungswicklung ist damit halbiert, wodurch die Magnetisierung und damit das Bremsmoment des Stellmotors sich entsprechend verringert. Mit dem Stromteiler kann also ein Mittelweg eingeschlagen werden zwischen dem vollen Stromfluss durch die Erregungswicklung, welcher zu einer unerwünschten Mitkopplung führen kann, und einem Kurzschluss der Erregungswicklung, welcher zu einem unerwünscht starken Absinken des Bremsmoments führt.

Vorzugsweise besteht der Stromteiler aus der Reihenschlusswicklung und einem festen Parallelwiderstand. Zweckmäßigerweise kann der Stromteiler mehrstufig mit mindestens zwei Widerständen in Reihen- oder Parallelschaltung ausgeführt werden, die wählbar mit dem Schaltelement verbunden sind. Damit kann durch entsprechende Wahl der Werte der mindestens zwei Parallelwiderstände eine Abstufung des gewünschten Bremsmoments erfolgen, beispielsweise bei Parallelschaltung von zwei binär abgestuften Widerständen eine Verringerung des Bremsmoments um 75 %, 50 % oder 25 %, je nachdem welcher Parallelwiderstand mit dem Schaltelement verbunden ist. Die Parallelwiderstände können jeweils einzeln mit dem Schaltelement verbunden sein, oder aber auch in Kombination. Letzteres bietet den Vorteil, dass mehr Stufungen möglich sind als es der Anzahl der Parallelwiderstände entspricht. Beispielsweise können mit zwei Parallelwiderständen drei verschiedene Stufungen realisiert sein, während mit drei Parallelwiderständen sogar sieben verschiedene Stufungen realisiert sein können. Unter wählbar wird hierbei verstanden, dass die Auswahl der Parallelwiderstände dynamisch während des Betriebs erfolgen kann oder quasistatisch durch eine entsprechende Beschaltung des Schaltelements beziehungsweise der jeweiligen Parallelwiderstände im Klemmenblock realisiert ist. In der Regel genügt Letzteres, da die durch die Parallelwiderstände bewirkte Beeinflussung der Drehmoment-Drehzahl-Kennlinie durch die Konfiguration der Windenergieanlage bestimmt ist, insbesondere durch die Rotorblätter und den verwendeten Stellmotor, also während des Betriebs unveränderliche Parameter.

Die Ausführung des Stromteilers mittels einem oder mehrerer Parallelwiderstände bietet insbesondere den Vorteil, dass sie auch mit geringem Aufwand an bereits vorhandene Motoren nachrüstbar ist. Dieser Einfachheit steht allerdings der Nachteil gegenüber, dass in dem Widerstand Verlustwärme entstehen kann, die abgeführt werden muss. Dies kann aktiv durch Kühlung geschehen, was aber zusätzlichen Aufwand verursacht, oder passiv durch ausreichend große Belüftungsquerschnitte, was aber wiederum die Einsetzbarkeit der Ausführungsform einschränkt. Da der Schiebebetrieb nur kurzzeitig während des Notbetriebs vorkommt, müssen die Widerstände nicht für Dauerbetrieb, sondern nur für eine kurzzeitige Energieaufnahme ausgelegt werden. Diesen Nachteil vermeidet die zweite Ausführungsform der Erfindung.

Gemäß der zweiten Ausführungsform der Erfindung ist für den Stromteiler vorgesehen, dass die Erregungswicklung in mindestens zwei Teilwicklungen aufgeteilt ist, wobei das Schaltelement eine oder mehrere aber nicht alle der Teilwicklungen im Schiebebetrieb überbrückt. Damit wird erreicht, dass im Schiebebetrieb mindestens eine Teilwicklung nicht mehr bestromt ist und damit keinen Beitrag zur Magnetisierung leistet, während die andere bzw. die restlichen Teilwicklungen weiterhin vom Strom durchflossen ist. Da die insgesamt entstehende Magnetisierung von der Anzahl der bestromten Wicklungen abhängig ist, ergibt sich entsprechend dem Verhältnis der deaktivierten Teilwicklung zu der aktiv bleibenden Teilwicklung eine Reduktion der Magnetisierung. Die Steigung der Drehmoment-Drehzahl-Kennlinie und damit das Bremsmoment im Schiebebetrieb kann so geeignet gewählt werden. Diese Ausführungsform bietet den Vorteil, dass lediglich eine Aufteilung der ohnehin vorhandenen Erregungswicklung erforderlich ist. Zusätzliche Bauteile außer mindestes einer zusätzlichen Klemme fallen nicht an.

Zweckmäßigerweise kann die Erregungswicklung in mehr als zwei Teilwicklungen unterteilt sein, die wählbar mit dem Schaltelement verbunden sind. Beispielsweise kann die Erregungswicklung, sofern es die vorhandene Windungszahl erlaubt, unterteilt sein in Abschnitte zu je 25 %, so dass durch entsprechende Beschaltung mit dem Schaltelement eine Verringerung des Bremsmoments um 25 %, 50 % oder 75 % gewählt werden kann. Zusätzlicher Hardwareaufwand fällt hierfür praktisch nicht an, da lediglich entsprechende Zwischenabzapfungen an der Erregungswicklung vorzusehen sind und an eine Anschlussklemme gelegt zu werden brauchen.

Bei beiden Ausführungsformen, der mit Parallelwiderstand und derjenigen mit geteilter Erregungswicklung, kann mittels eines Wahlschalters ausgewählt werden, welcher Grad der Stromteilung vorgenommen werden soll. Dieser Wahlschalter kann fest eingestellt sein, oder auch während des Betriebs durch die Betriebsführung der Windenergieanlage verändert werden, sofern dieses für den Betrieb der Windenergieanlage vorteilhaft ist. Der Wahlschalter bietet den Vorteil, dass im Betrieb bestimmt werden kann, ob eine größere oder kleinere Stromteilung in Bezug auf die Erregungswicklung vorgenommen werden soll, und entsprechend die Drehmoment-Drehzahl-Kennlinie eine kleinere oder größere Steigung aufweisen soll. Hierbei braucht der Wahlschalter nicht zwingend eine gesonderte Einheit zu sein, sondern kann zweckmäßigerweise auch mit dem Schaltelement kombiniert ausgeführt sein. Damit ergibt sich eine besonders kompakte und leicht anzusteuernde Ausführung.

Die Erfindung bezieht sich weiter auf eine Verstelleinrichtung für die Rotorblätter einer Windenergieanlage mit einem Stellmotor, der mindestens eine Erregungswicklung aufweist, wobei die Verstelleinrichtung eine Drehmomentschwächungseinrichtung aufweist, die selbständig ein Schleppmoment des Stellmotors verringert, wobei gemäß der Erfindung die Drehmomentschwächungseinrichtung einen Stromteiler aufweist, der einen Strom durch die Erregungswicklung in der Weise schaltet, dass die Erregungswicklung im Motorbetrieb voll und im Schiebebetrieb nur teilweise von dem Strom durchflossen wird. Zur näheren Erläuterung wird auf obige Ausführungen verwiesen.

Die Erfindung wird nachfolgend unter Bezugnahme auf die beigefügte Zeichnung erläutert, in der vorteilhafte Ausführungsbeispiele der Erfindung dargestellt sind. Es zeigen:

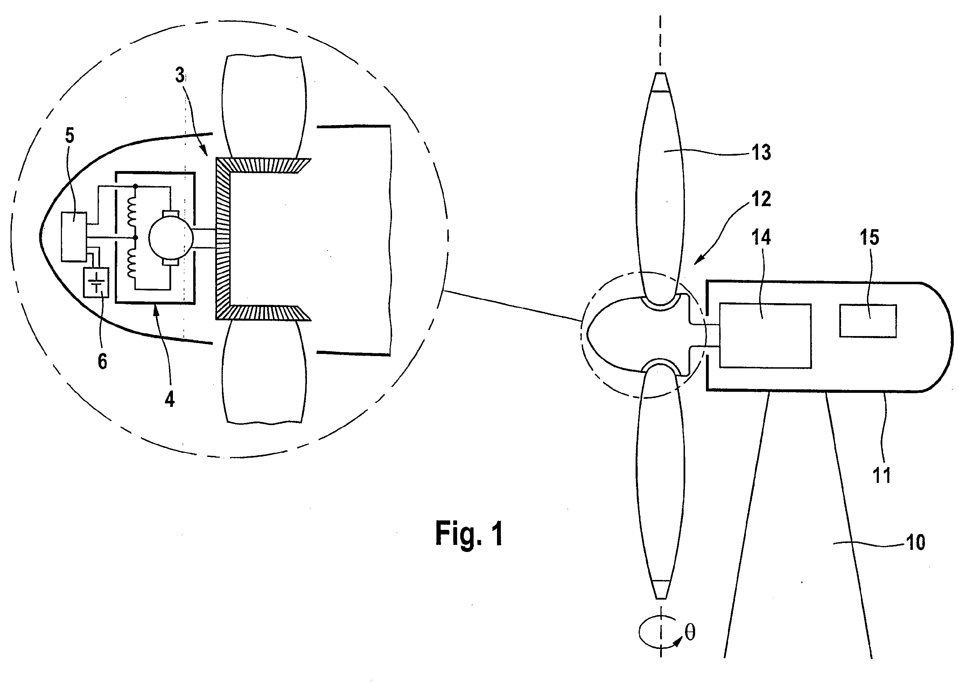

- Fig. 1: eine schematische Darstellung einer Windenergieanlage mit einer Verstelleinrichtung;
- Fig. 2: Ersatzschaltbild eines Stellmotors mit einer Drehmomentschwächungseinrichtung entsprechend einer ersten Ausführungsform;
- Fig. 3: eine Variante der in Fig. 2 dargestellten Ausführungsform;
- Fig. 4: eine zweite Ausführungsform für die erfindungsgemäße Drehmomentschwächungseinrichtung und Stellmotor;
- Fig. 5: eine Variante für die in Fig. 4 dargestellte zweite Ausführungsform; und
- Fig. 6: Drehmoment-Drehzahl-Kennlinien.

Die Erfindung wird erläutert am Beispiel einer Windenergieanlage mit einem auf einem Turm 10 in Azimutrichtung drehbar angeordnete Maschinenhaus 11, an dessen einer Stirnseite ein Windrotor 12 mit mehreren (im dargestellten Beispiel zwei) bezüglich ihres Anstellwinkels verstellbaren Rotorblättern 13 angeordnet ist, zum Antreiben eines Generators 14 in dem Maschinenhaus. Die von ihm erzeugte elektrische Energie gibt der Generator 14 über eine nicht dargestellte Verbindung ab.

Zur Verstellung des Anstellwinkels θ der Rotorblätter 13 ist eine Verstelleinrichtung 3 vorgesehen. Dargestellt ist eine Verstelleinrichtung 3 für alle Blätter, es können aber für jedes Blatt einzelne, zumindest teilweise unabhängige Verstelleinrichtungen 3 vorhanden sein. Sie umfasst einen Stellmotor 4 und ein Blattsteuermodul 5. Das Blattsteuermodul 5 betätigt den Stellmotor 4 in der Weise, um einen als Eingangssignal angelegten Sollwert für den Blattwinkel θ an den Rotorblättern 13 einzustellen. Der Sollwert wird bereitgestellt von einer Betriebsführungseinheit 15 der Windenergieanlage.

Die Blattverstelleinrichtung kann auf zweierlei Weise betrieben werden. Die erste Betriebsphase ist ein Normalbetrieb, in dem die Windenergieanlage zur Erzeugung elektrischer Leistung betrieben wird. Der Normalbetrieb wird kontrolliert von der Betriebsführungseinheit 15. Die andere Betriebsart ist ein Notbetrieb, in dem die Windenergieanlage unter bestimmten Bedingungen in einen sicheren Betriebszustand gebracht wird. Zum Erreichen des sicheren Betriebszustands gehört es, dass der Rotor 12 zum Stillstand gebracht wird und die Rotorblätter 13 in eine Fahnenstellung gebracht werden. Fahnenstellung bedeutet, dass die Rotorblätter 13 einen Anstellwinkel von etwa θ = 90 Grad einnehmen. Um den Notbetrieb auch dann durchführen zu können, wenn aufgrund einer Störung keine Verbindung mit einem Stromnetz mehr besteht, weist die Windenergieanlage einen eigenen Reserveenergiespeicher 6 auf, der auch im Netzausfall die Verstelleinrichtung 3 mit elektrischer Energie versorgt. Um das Erreichen der sicheren Fahnenstellung auch dann zu gewährleisten, wenn die Betriebsführungseinheit 15 oder das Blattsteuermodul 5 ausgefallen sind, ist die Verstelleinrichtung 3 so ausgebildet, dass sie autark die Rotorblätter 13 in die sichere Fahnenstellung verfahren kann. Dazu ist der Stellmotor 4 so geschaltet, dass die Blätter 3 im ungeregelten Betrieb in die Fahnenstellung verfahren werden (sog. ungeregelte Akkufahrt).

Der Stellmotor 4 ist als Doppelschlussmotor ausgebildet. Er umfasst einen Anker 40, eine Erregungswicklung (fortan als Reihenschlusswicklung 41 bezeichnet) sowie eine Nebenschlusswicklung 42. Der Anker ist über ein Verstellgetriebe (nicht dargestellt) mechanisch so jeweils mit einem Rotorblatt 13 verbunden, dass der Anstellwinkel θ beim Betätigen des Stellmotors 4 verändert wird.

Im Notbetrieb speist die Batterie 6 Strom ein, der zum einen über das Nebenschlussfeld 42 fließt und zum anderen über einen Zweig, der von dem Anker 40, der Reihenschlusswicklung 41 und einem dazwischen geschalteten Gleichrichter 7 gebildet ist. Der durch diesen Zweig fließende Strom wird als Ankerstrom bezeichnet. Insoweit entspricht der Aufbau einer herkömmlichen Verstelleinrichtung ohne Drehmomentschwächungseinrichtung.

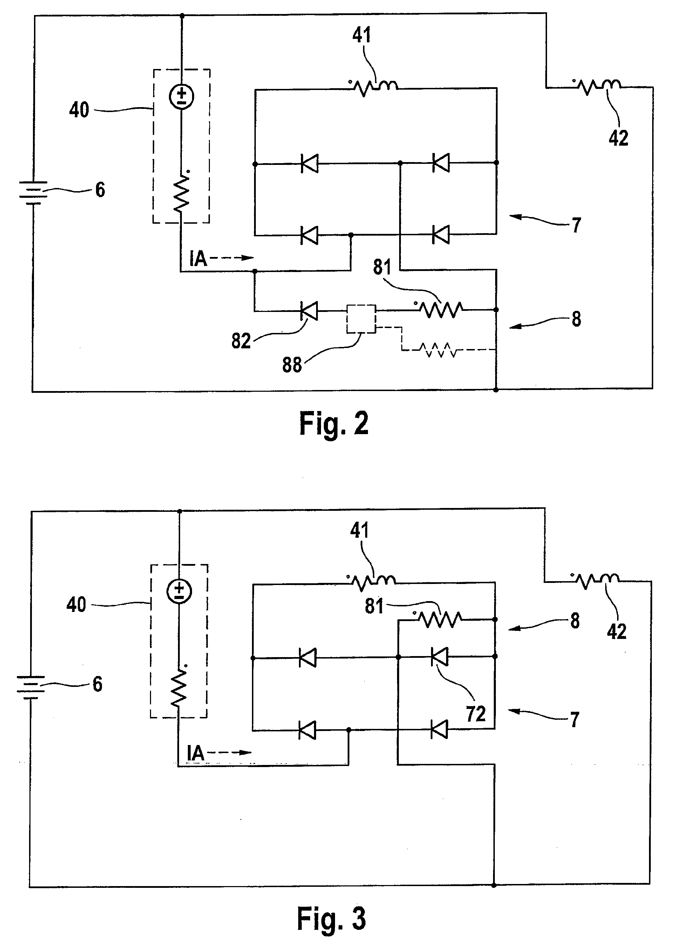

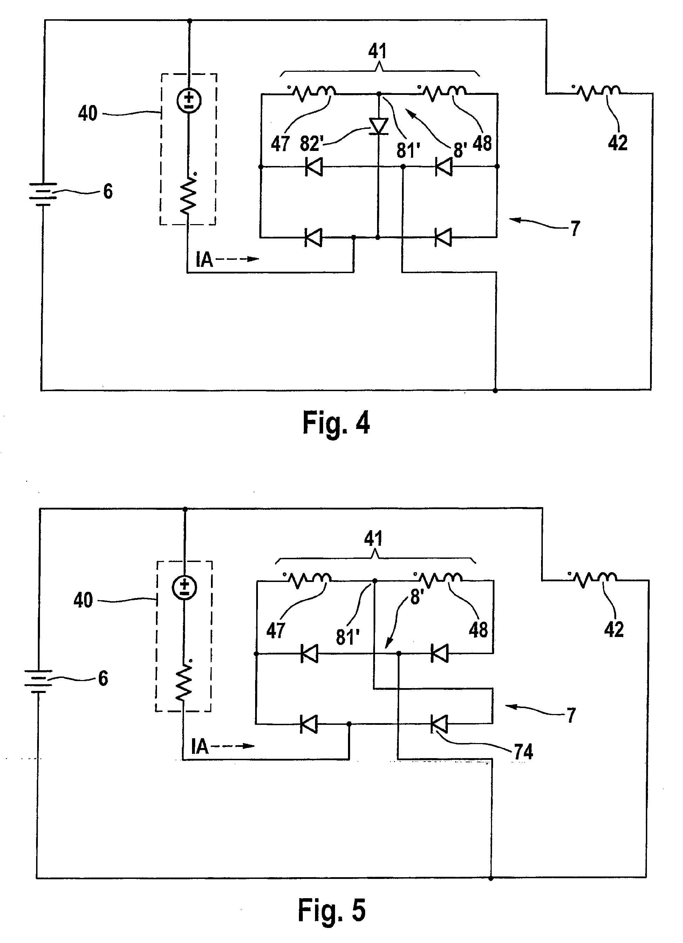

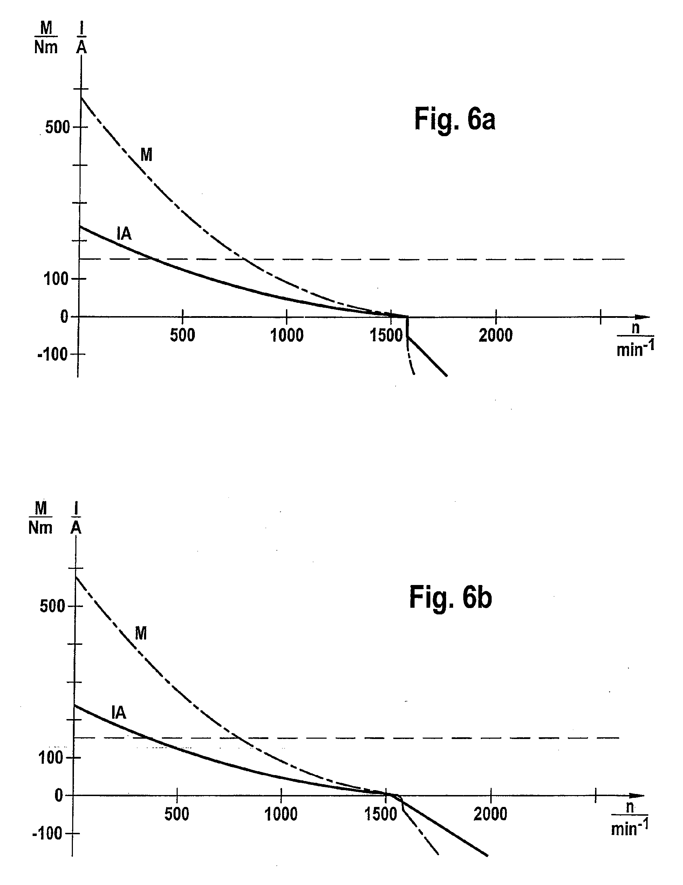

Bei der in Fig. 2 dargestellten Ausführungsform ist eine Drehmomentschwächungseinrichtung 8 vorgesehen. Sie umfasst einen Parallelwiderstand 81 und eine Diode 82 als Schaltelement. Die Diode ist so gepolt, dass bei regulärem Motorbetrieb mit positivem Ankerstrom die Diode 82 als Schaltelement sperrt, so dass kein Strom durch diesen Zweig fließt. Kommt der Stellmotor 4 jedoch aufgrund von an dem zu verstellenden Rotorblatt 13 angreifenden aerodynamischen Lasten in den Schiebebetrieb, so kehrt sich die Stromflussrichtung um. In diesem Fall wird die Diode 82 als Schaltelement leitend, so dass der Ankerstrom IA nicht mehr vollständig durch die Reihenschlusswicklung 41 fließt, sondern sich auf diese und den Parallelwiderstand 81 aufteilt. Weist der Parallelwiderstand 81 einen Wert auf, der demjenigen der Reihenschlusswicklung 41 entspricht, so verteilen sich die Ströme gleichmäßig auf den Parallelwiderstand 81 und die Reihenschlusswicklung 41, das heißt, es fließt nur noch der halbe Strom durch die Reihenschlusswicklung. Die Magnetisierung und damit das Schleppmoment des Stellmotors 4 verringern sich damit entsprechend. Die sich so ergebende Drehmoment-Drehzahl-Kennlinie und der jeweilige Ankerstrom IA sind in Fig. 6B dargestellt. Man erkennt einen deutlich flacheren Verlauf verglichen mit einem herkömmlichen Stellmotor ohne Stromteiler, bei dem auch im Schiebebetrieb der gesamte Strom durch die Reihenschlusswicklung 41 fließt (siehe Fig. 5A).

Optional können zwei oder mehr Parallelwiderstände vorgesehen sein (s. gestrichelte Darstellung in Fig. 2). Über einen Wahlschalter 88 ist auswählbar, welcher oder welche Kombination von Parallelwiderständen im Parallelzweig geschaltet sind. Die Werte der Parallelwiderstände sind verschieden und können zweckmäßigerweise so gewählt werden, dass je nach Stellung des Wahlschalters 88 ein Stromanteil von 25 % (Schaltung auf den größeren Parallelwiderstand, von 50% (Schaltung auf den kleineren Parallelwiderstand) oder von 75 % (Schaltung auf beide Parallelwiderstände) durch den Parallelzweig fließt, und damit das Bremsmoment und die Drehmoment-Drehzahl-Kennlinie entsprechend verändert werden.

In Fig. 3 ist eine Variante der Ausführungsform gemäß Fig. 2 dargestellt. Gleichartige Elemente sind mit denselben Bezugszeichen versehen. Sie unterscheidet sich im Wesentlichen dadurch, dass der Parallelwiderstand 81 des Stromteilers 8 parallel zu einer Diode 71 des Gleichrichters 7 angeordnet ist. Sie fungiert damit als Schaltelement für den Stromteiler, so dass eine gesonderte Diode 82 nicht erforderlich ist.

Eine zweite Ausführungsform der Erfindung wird unter Bezugnahme auf die Fig. 4 und 5 erläutert. Der Grundaufbau mit einer Batterie 6, einem Stellmotor 4 mit Anker 40, Reihenschlusswicklung 41 und Nebenschlusswicklung 42 entspricht der vorstehend beschriebenen ersten Ausführungsform. Der Stromteiler 8' ist hier jedoch anders ausgeführt. Ein Parallelwiderstand ist nicht vorgesehen, sondern stattdessen ist die Reihenschlusswicklung in zwei Teilwicklungen 47 und 48 aufgeteilt, wobei an der Verbindungsstelle zwischen den beiden Teilwicklungen 47, 48 eine Mittelanzapfung 81' vorgesehen ist. An diese Mittelanzapfung ist die Anode einer Diode 82' als Schaltelement angeschlossen, deren Kathode an den Anker 40 angeschlossen ist. Im normalen motorischen Betrieb fließt der Strom durch die Ankerwicklung 40 und über den Gleichrichter 7 in die Reihenschlusswicklung 41. Hierbei sperrt die als Schaltelement fungierende Diode 82'. Der gesamte Ankerstrom IA fließt durch die Reihenschlusswicklung 41, eine Stromteilung findet nicht statt. Im Schiebebetrieb hingegen kehrt sich, wie vorstehend beschrieben, die Stromflussrichtung um. Die als Schaltelement fungierende Diode 82' wird nun leitend und überbrückt die Teilwicklung 48. Der Ankerstrom fließt also nur noch teilweise durch die Reihenschlusswicklung, nämlich lediglich noch durch deren Teilwicklung 47. Die Magnetisierung der Reihenschlusswicklung 41 verringert sich dadurch entsprechend dem Verhältnis der Wicklungszahl der Teilwicklungen 47, 48. In dem gewählten Beispiel seien die beiden Wicklungszahlen gleich, so dass im Schiebebetrieb bei durchschaltender Diode 82' die Erregungswicklung 41 nur noch so bestromt wird, dass die Hälfte der Wicklung deaktiviert und die Magnetisierung dementsprechend verringert ist. Das Schleppmoment des Stellmotors verringert sich dementsprechend. Es ergibt sich wiederum eine Kennlinie, wie sie in Fig. 5B dargestellt ist.

Man erkennt aus dem Vergleich der Kennlinien in Fig. 6, dass die mit dem erfindungsgemäßen Stromteiler einstellbare Kennlinie deutlich flacher verläuft als ohne, aber deutlich steiler als bei einem Kurzschluss der Reihenschlusswicklung 41 (siehe Fig. 5C). In Fig. 5 ist eine Variante der zweiten Ausführungsform gemäß Fig. 4 dargestellt. Sie unterscheidet sich von dieser im Wesentlichen dadurch, dass eine Diode des Gleichrichters, nämlich die Diode 74, mit ihrer Anode nicht mehr an einem Endpunkt der Reihenschlusswicklung 41, sondern mit der Mittelanzapfung 81' verbunden ist. Damit fungiert diese Diode 74 als Schaltelement für den Stromteiler, so dass keine gesonderte Diode als Schaltelement vorgesehen zu werden braucht. Für die Funktionsweise gilt das zu der Ausführungsform gemäß Fig. 4 Ausgeführte.

## Patentansprüche

1. Windenergieanlage umfassend einen Rotor (12) mit verstellbaren Rotorblättern (13) zum Antrieb eines Generators (14), einer Verstelleinrichtung (3) für die Rotorblätter (13) mit einem Stellmotor (4), der mindestens eine Erregungswicklung (41) aufweist, wobei die Verstelleinrichtung (3) eine Drehmomentschwächungseinrichtung aufweist, die selbsttätig ein Schleppmoment des Stellmotors (4) verringert,
**dadurch gekennzeichnet, dass**
die Drehmomentschwächungseinrichtung einen Stromteiler (8') aufweist, der als eine mindestens in zwei Teilwicklungen (47, 48) aufweisende Erregungswicklung (41) ausgeführt ist und der einen Strom durch die Erregungswicklung (41) in der Weise schaltet, dass die Erregungswicklung (41) im Motorbetrieb voll und im Schiebebetrieb nur teilweise von dem Strom (IA) durchflossen wird, wobei ein Schaltelement (82') im Schiebebetrieb den Strom (IA) durch mindestens eine, aber nicht alle der Teilwicklungen (47) unterbricht.

2. Windenergieanlage nach Anspruch 1,
**dadurch gekennzeichnet, dass**
eine Mehrzahl von Teilwicklungen (47, 48) vorgesehen sind, die wählbar mit dem Schaltelement (82') verbunden sind.

3. Windenergieanlage umfassend einen Rotor (12) mit verstellbaren Rotorblättern (13) zum Antrieb eines Generators (14), einer Verstelleinrichtung (3) für die Rotorblätter (13) mit einem Stellmotor (4), der mindestens eine Erregungswicklung (41) aufweist, wobei die Verstelleinrichtung (3) eine Drehmomentschwächungseinrichtung aufweist, die selbsttätig ein Schleppmoment des Stellmotors (4) verringert,
**dadurch gekennzeichnet, dass**
die Drehmomentschwächungseinrichtung einen mehrstufigen Stromteiler (8) aufweist, der einen Parallelzweig zur Erregungswicklung (41) mit einem im Schiebebetrieb durchschaltenden Schaltelement (82) und mehrere Parallelwiderstände (81) unterschiedlichen Werts umfasst, die wählbar mit dem Schaltelement (82) verbunden sind, und der einen Strom durch die Erregungswicklung (41) in der Weise schaltet, dass die Erregungswicklung (41) im Motorbetrieb voll und im Schiebebetrieb nur teilweise von dem Strom (IA) durchflossen wird.

4. Windenergieanlage nach Anspruch 1 oder 3,
**dadurch gekennzeichnet, dass**
das Schaltelement (82, 82') so ausgebildet ist, dass es im Schiebebetrieb passiv durchschaltet.

5. Windenergieanlage nach Anspruch 2 oder 3,
**dadurch gekennzeichnet, dass**
ein Wahlschalter (88) zum Anwählen der Widerstände (81) oder Teilwicklungen vorgesehen ist.

6. Windenergieanlage nach Anspruch 5,
**dadurch gekennzeichnet, dass**
der Wahlschalter (88) und das Schaltelement (82) kombiniert ausgeführt sind.

7. Verstelleinrichtung für die Rotorblätter (13) einer Windenergieanlage mit einem Stellmotor (4), der mindestens eine Erregungswicklung (41) aufweist, wobei die Verstelleinrichtung (3) eine Drehmomentschwächungseinrichtung umfasst, die selbsttätig ein Schleppmoment des Stellmotors (4) verringert,
**dadurch gekennzeichnet, dass**
die Drehmomentschwächungseinrichtung einen Stromteiler (8, 8') aufweist, der als eine mindestens in zwei Teilwicklungen (47, 48) aufweisende Erregungswicklung (41) ausgeführt ist und der einen Strom durch die Erregungswicklung (41) in der Weise schaltet, dass die Erregungswicklung (41) im Motorbetrieb voll und im Schiebebetrieb nur teilweise von dem Strom (IA) durchflossen wird, wobei ein Schaltelement (82') im Schiebebetrieb den Strom (IA) durch mindestens eine, aber nicht alle der Teilwicklungen (47) unterbricht.

8. Verstelleinrichtung für die Rotorblätter (13) einer Windenergieanlage mit einem Stellmotor (4), der mindestens eine Erregungswicklung (41) aufweist, wobei die Verstelleinrichtung (3) eine Drehmomentschwächungseinrichtung umfasst, die selbsttätig ein Schleppmoment des Stellmotors (4) verringert,
**dadurch gekennzeichnet, dass**
die Drehmomentschwächungseinrichtung einen mehrstufigen Stromteiler (8) aufweist, der einen Parallelzweig zur Erregungswicklung (41) mit einem im Schiebebetrieb durchschaltenden Schaltelement (82) und mehrere Parallelwiderstände (81) unterschiedlichen Werts umfasst, die wählbar mit dem Schaltelement (82) verbunden sind, und der einen Strom durch die Erregungswicklung (41) in der Weise schaltet, dass die Erregungswicklung (41) im Motorbetrieb voll und im Schiebebetrieb nur teilweise von dem Strom (IA) durchflossen wird.

9. Verstelleinrichtung nach Anspruch 7 oder 8,
**dadurch gekennzeichnet, dass**
der Stromteiler (8, 8') gemäß einem der Ansprüche 2 bis 8 ausgebildet ist.

## Claims

1. Wind energy installation comprising a rotor (12) having adjustable rotor blades (13) for driving a generator (14), having an adjustment device (3) for the rotor blades (13) with an actuating motor (4) which has at least one field winding (41), wherein the adjustment device (3) has a torque weakening device which automatically reduces a drag torque of the actuating motor (4),
**characterized in that**
the torque weakening device has a current divider (8') which is in the form of a field winding (41) divided into at least two winding elements (47, 48) and which switches a current through the field winding (41) in such a manner that all the current (IA) flows through the field winding (41) during motor operation, and only part of the current (IA) flows through the field winding (41) during slip operation, with a switching element (82') interrupting the current (IA) during slip operation by means of at least one but not all, of the winding elements (47).

2. Wind energy installation according to Claim 1,
**characterized in that**
a plurality of winding elements (47, 48) are provided and can be selectively connected to the switching element (82').

3. Wind energy installation comprising a rotor (12) having adjustable rotor blades (13) for driving a generator (14), having an adjustment device (3) for the rotor blades (13) having an actuating motor (4) which has at least one field winding (41), wherein the adjustment device (3) has a torque weakening device which automatically reduces a drag torque of the actuating motor (4)
**characterized in that**
the torque weakening device has a current divider (8) with a plurality of stages which comprises a branch in parallel with the field winding (41) with a switching element (82), which is switched on during slip operation and a plurality of parallel resistances (81) of different value, which can be selectively connected to the switching element (82), and which switches a current through the field winding (41) in such a manner that all the current (IA) flows through the field winding (41) during motor operation, and only part of the current (IA) flows through the field winding (41) during slip operation.

4. Wind energy installation according to Claim 1 or 3,
**characterized in that**
the switching element (82, 82') is designed such that it is switched on passively during slip operation.

5. Wind energy installation according to Claim 2 or 3,
**characterized in that**
a selection switch (88) is provided for selection of the resistances (81) or winding elements.

6. Wind energy installation according to Claim 5,
**characterized in that**
the selection switch (88) and the switching element (82) are combined.

7. Adjustment device for the rotor blades (13) of a wind energy installation having an actuating motor (4) which has at least one field winding (41), wherein the adjustment device (3) has a torque weakening device which automatically reduces a drag torque of the actuating motor (4)
**characterized in that**
the torque weakening device has a current divider (8, 8') which is in the form of a field winding (41) divided into at least two winding elements (47, 48) and which switches a current through the field winding (41) in such a manner that all the current (IA) flows through the field winding (41) during motor operation, and only part of the current (IA) flows through the field winding (41) during slip operation, with a switching element (82') interrupting the current (IA) during slip operation by means of at least one but not all, of the winding elements (47).

8. Adjustment device for the rotor blades (13) of a wind energy installation having an actuating motor (4) which has at least one field winding (41), wherein the adjustment device (3) has a torque weakening device which automatically reduces a drag torque of the actuating motor (4)
**characterized in that**
the torque weakening device has a current divider (8) with a plurality of stages which comprises a branch in parallel with the field winding (41) with a switching element (82), which is switched on during slip operation and a plurality of parallel resistances (81) of different value, which can be selectively connected to the switching element (82), and which switches a current through the field winding (41) in such a manner that all the current (IA) flows through the field winding (41) during motor operation, and only part of the current (IA) flows through the field winding (41) during slip operation.

9. Adjustment device according to Claim 7 or 8,
**characterized in that**
the current divider (8, 8') is designed according to one of Claims 2 to 8.

## Revendications

1. Centrale éolienne comportant un rotor (12) avec des pales (13) réglables permettant l'entraînement d'un générateur (14), un dispositif de réglage (3) pour les pales (13) du rotor, muni d'un servomoteur (4) qui comporte au moins une bobine d'excitation (41), ledit dispositif de réglage (3) comportant un dispositif d'atténuation du couple qui réduit automatiquement un couple de traînée du servomoteur (4),
**caractérisée en ce que**
le dispositif d'atténuation du couple comporte une inductance de passage (8') qui est configuré sous la forme d'une bobine d'excitation (41) comportant au moins deux enroulements partiels (47, 48) et qui fait passer un courant à travers la bobine d'excitation (41) de telle sorte que la bobine d'excitation (41) est parcourue entièrement par le courant (IA) en mode moteur et seulement partiellement en régime de poussée, un élément de commutation (82') interrompant en régime de poussée le courant (IA) à travers au moins une et non pas tous les enroulements partiels (47).

2. Centrale éolienne selon la revendication 1, **caractérisée en ce qu'**il est prévu une pluralité d'enroulements partiels (47, 48) qui sont reliés au choix à l'élément de commutation (82').

3. Centrale éolienne comportant un rotor (12) avec des pales (13) réglables permettant l'entraînement d'un générateur (14), un dispositif de réglage (3) pour les pales (13) du rotor, muni d'un servomoteur (4) qui comporte au moins une bobine d'excitation (41), ledit dispositif de réglage (3) comportant un dispositif d'atténuation du couple qui réduit automatiquement un couple de traînée du servomoteur (4),
**caractérisée en ce que**
le dispositif d'atténuation du couple comporte une inductance de passage (8) à plusieurs niveaux qui comprend une branche parallèle à la bobine d'excitation (41) avec un élément de commutation (82) commutant en régime de poussée et plusieurs résistances parallèles (81) de valeur différente, lesquelles sont reliées au choix à l'élément de commutation (82), et qui fait passer un courant à la travers la bobine d'excitation (41) de telle sorte que la bobine d'excitation (41) est parcourue entièrement par le courant (IA) en mode moteur et seulement partiellement en régime de poussée.

4. Centrale éolienne selon la revendication 1 ou 3, **caractérisée en ce que** l'élément de commutation (82, 82') est configuré de telle sorte qu'il commute passivement en régime de poussée.

5. Centrale éolienne selon la revendication 2 ou 3, **caractérisée en ce qu'**il est prévu un sélecteur (88) permettant de sélectionner les résistances (81) ou les enroulements partiels.

6. Centrale éolienne selon la revendication 5, **caractérisée en ce que** le sélecteur (88) et l'élément de commutation (82) sont réalisés sous forme combinée.

7. Dispositif de réglage pour les pales (13) du rotor d'une centrale éolienne, comportant un servomoteur (4) qui comporte au moins une bobine d'excitation (41), ledit dispositif de réglage (3) comportant un dispositif d'atténuation du couple qui réduit automatiquement un couple de traînée du servomoteur (4),
**caractérisé en ce que**
le dispositif d'atténuation du couple comporte une inductance de passage (8, 8') qui est configurée sous la forme d'une bobine d'excitation (41) comportant au moins deux enroulements partiels (47, 48) et qui fait passer un courant à travers la bobine d'excitation (41) de telle sorte que la bobine d'excitation (41) est parcourue entièrement par le courant (IA) en mode moteur et seulement partiellement en régime de poussée, un élément de commutation (82') interrompant en régime de poussée le courant (IA) à travers au moins une et non pas tous les enroulements partiels (47).

8. Dispositif de réglage pour les pales (13) du rotor d'une centrale éolienne, comportant un servomoteur (4) qui comporte au moins une bobine d'excitation (41), ledit dispositif de réglage (3) comportant un dispositif d'atténuation du couple qui réduit automatiquement un couple de traînée du servomoteur (4),
**caractérisé en ce que**
le dispositif d'atténuation du couple comporte une inductance de passage (8) à plusieurs niveaux qui comprend une branche parallèle à la bobine d'excitation (41) avec un élément de commutation (82) commutant en régime de poussée et plusieurs résistances parallèles (81) de valeur différente, lesquelles sont reliées au choix à l'élément de commutation (82), et qui fait passer un courant à la travers la bobine d'excitation (41) de telle sorte que la bobine d'excitation (41) est parcourue entièrement par le courant (IA) en mode moteur et seulement partiellement en régime de poussée.

9. Dispositif de réglage selon la revendication 7 ou 8, **caractérisé en ce que** l'inductance de passage (8, 8') est configurée selon l'une quelconque des revendications 2 à 8.
